# EUROPÄISCHE PATENTANMELDUNG

(11) **EP 3 333 016 A1**
(43) Veröffentlichungstag der Anmeldung: **13.06.2018**
(21) Anmeldenummer: 16203401.1
(22) Anmeldetag: 12.12.2016
(51) Int. Cl.: B60Q 1/08

(54) **FAHRZEUG-SICHERHEITSVORRICHTUNG**

(71) Anmelder: Magna Steyr Fahrzeugtechnik AG & Co KG, 8041 Graz (AT)
(72) Erfinder: PESSL, Benjamin, 8020 Graz (AT)
(74) Vertreter: Zangger, Bernd

(57) **Zusammenfassung**

Eine Fahrzeug-Sicherheitsvorrichtung, umfassend eine Erkennungseinrichtung die dazu eingerichtet ist, einen unübersichtlichen Fahrtabschnitt (3) vor dem Fahrzeug (4) in Fahrtrichtung zu erkennen und eine Signalisierungseinrichtung, die dazu eingerichtet ist, ein Signal (1) auf den unübersichtlichen Fahrtabschnitt (3) abzugeben und ein Fahrzeug umfassend eine solche Fahrzeug-Sicherheitsvorrichtung.

## Beschreibung

### Gebiet der Erfindung

Die vorliegende Erfindung betrifft eine Fahrzeug-Sicherheitsvorrichtung, also eine Einrichtung zur Erhöhung der Sicherheit beim Betrieb eines Fahrzeugs, sowie ein Fahrzeug mit einer solchen Fahrzeug-Sicherheitsvorrichtung.

### Stand der Technik

Es ist an sich bekannt in einem Fahrzeug Vorrichtungen vorzusehen, die der Erhöhung der Sicherheit der Fahrzeuginsassen oder auch der Erhöhung der Sicherheit von Personen außerhalb des Fahrzeuges dienen.

Beispielsweise sind Einrichtungen wie Sicherheitsgurt und Airbag Systeme zur Erhöhung der Insassen-Sicherheit seit langem bekannt. Zum Schutz von Fußgängern ist es beispielsweise bekannt, Fußgänger-Aufprall-Zonen im Frontbereich eines Fahrzeuges mit anderen, nachgiebigeren mechanischen Eigenschaften auszubilden, als andere Zonen der Fahrzeugkarosserie.

Inzwischen ist es auch bekannt bestimmte Objekte in der Umgebung eines Fahrzeuges zu detektieren und diese gezielt auszuleuchten.

So offenbart zum Beispiel die DE 10 2011 081 382 A1 ein Verfahren zum Ändern einer Lichtaussendung zumindest eines Scheinwerfers eines Fahrzeugs, wobei das Verfahren die folgenden Schritte aufweist:
- Einlesen eines Positionssignals, das eine Position des Objektes vor oder neben dem Fahrzeug repräsentiert; und
- Verändern der Lichtaussendung von dem zumindest einen Scheinwerfer des Fahrzeugs auf das Objekt oder in ein Umfeld des Objekts unter Verwendung des Positionssignals.

### Zusammenfassung der Erfindung

Es ist eine Aufgabe der Erfindung, eine alternative Fahrzeug-Sicherheitsvorrichtung anzugeben, die es ermöglicht das Sicherheitsrisiko in gefährlichen Situationen zu senken.

Die Lösung der Aufgabe erfolgt durch eine Fahrzeug-Sicherheitsvorrichtung, umfassend eine Erkennungseinrichtung die dazu eingerichtet ist, einen unübersichtlichen Fahrtabschnitt vor dem Fahrzeug in Fahrtrichtung zu erkennen und eine Signalisierungseinrichtung, die dazu eingerichtet ist ein Signal auf den unübersichtlichen Fahrtabschnitt abzugeben.

Erfindungsgemäß ist eine Erkennungseinrichtung in einem Fahrzeug, insbesondere in einem Kraftfahrzeug, vorgesehen, die einen unübersichtlichen Fahrtabschnitt erkennen kann, auf den sich das Fahrzeug zubewegt. Die Fahrtrichtung kann dabei auch eine Rückwärtsbewegung des Fahrzeuges einschließen, insbesondere bei einem eingelegten Rückwärtsgang des Fahrzeuges. Dann bezieht sich der Fahrtabschnitt vor dem Fahrzeug in Fahrtrichtung selbstverständlich auf einen Abschnitt hinter dem Heck des Fahrzeuges.

Ein unübersichtlicher Fahrtabschnitt ist erfindungsgemäß eine Position auf einer Fahrstrecke, zu der das Fahrzeug aus einer ersten Richtung gelangen kann und zu der ein weiterer Verkehrsteilnehmer aus einer zweiten Richtung gelangen kann, wobei die erste Richtung und die zweite Richtung einen Winkel kleiner als 180 Grad einschließen, insbesondere einen Winkel von ca. 90 Grad oder kleiner als 90 Grad, wobei innerhalb des eingeschlossenen Winkels ein Sichthindernis in einer vorgegebenen geringen Entfernung von der Position, also dem Scheitelpunkt des Winkels, liegt. Die vorgegebene geringe Entfernung kann zum Beispiel kleiner als 10 m oder kleiner als 6 m oder kleiner als 4 m oder kleiner als 2 m oder kleiner als 1 m sein.

Die vorgegebene geringe Entfernung kann bevorzugt abhängig von der aktuellen Geschwindigkeit des Fahrzeuges bestimmt werden.

Ein Sichthindernis kann insbesondere ein Objekt sein dass höher ist als eine übliche Augenhöhe eines Fahrers des Fahrzeuges, zum Beispiel mindestens 1 m oder mindestens 1,5 m hoch. Ein Sichthindernis kann insbesondere eine Mauer, ein Bauwerk oder ein natürliches Sichthindernis wie zum Beispiel ein Baum sein.

Im Gegensatz zu anderen Sicherheitslösungen ist es für eine erfindungsgemäße Fahrzeug-Sicherheitsvorrichtung nicht erforderlich, dass ein bewegtes Objekt, zum Beispiel ein weiteres Fahrzeug oder ein Fußgänger, detektiert wird. Auch muss ein Signal nicht an ein solches bewegtes Objekt abgegeben werden.

Die Signalisierungseinrichtung ist dazu eingerichtet ein Signal gezielt auf den unübersichtlichen Fahrtabschnitt abzugeben, also in einen Bereich um den Scheitelpunkt des beschriebenen Winkels, der vorzugsweise aus Richtung der erwähnten weiteren Verkehrsteilnehmer einsehbar ist.

Das Signal das die Signalisierungseinrichtung abgeben kann, kann insbesondere ein Lichtsignal sein.

Bevorzugt wird das Lichtsignal auf den Boden im Bereich des unübersichtlichen Fahrtabschnitts ausgestrahlt bzw. projiziert, insbesondere auf einen Gehsteigabschnitt oder einen Straßenabschnitt im Bereich des Scheitelpunktes.

Die Fahrzeug-Sicherheitsvorrichtung umfasst bevorzugt eine Steuereinheit zur Ansteuerung der Erkennungseinrichtung und/oder der Signalisierungseinrichtung.

Das Lichtsignal kann verschiedene Farben und/oder verschiedene Formen und/oder verschiedene Lichtintensitäten und/oder Ziffern und/oder Buchstaben und/oder Symbole und/oder Signalfolgen und/oder bewegliche Anzeigen, zum Beispiel bewegliche Pfeile, Laufschrift oder Animationen umfassen. Dazu ist bevorzugt die Steuereinheit so ausgebildet, dass die Signalisierungseinrichtung verschiedene der genannten Signale abhängig von Umgebungsparametern ausstrahlt, zum Beispiel abhängig von der Entfernung zum unübersichtlichen Fahrtabschnitt und/ oder von der Geschwindigkeit des Fahrzeuges.

Die Erkennungseinrichtung kann ein GPS-System und/oder eine Kamera und/oder ein Radarsystem und/oder eine Ultraschall-Sensorik umfassen.

Der unübersichtliche Fahrtabschnitt kann eine Ausfahrt sein, so dass also die Erkennungseinrichtung zur Erkennung einer unübersichtlichen Ausfahrt eingerichtet ist. Die Ausfahrt kann nahe eines Sichthindernisses, insbesondere einer Mauer, verlaufen. Insbesondere kann die Ausfahrt zwischen zwei Sichthindernissen insbesondere Mauern verlaufen.

Der unübersichtliche Fahrtabschnitt kann auch eine Kurve und/oder eine Kreuzung sein, so dass also die Erkennungseinrichtung zur Erkennung einer unübersichtlichen Kurve und/oder einer unübersichtlichen Kreuzung eingerichtet ist. Eine unübersichtliche Kurve kann ein im kurveninneren liegendes Sichthindernis, wie zum Beispiel Gebäude oder Bäume aufweisen.

Das Fahrzeug kann insbesondere ein Elektro-Fahrzeug sein. Gerade bei Fahrzeugen mit Elektroantrieb ist eine Warnung anderer Verkehrsteilnehmer mittels eines Signals, das an eine unübersichtliche Stelle im Fahrverlauf geschickt wird, auf Grund des geräuscharmen Motors besonders wichtig.

### Kurzbeschreibung der Zeichnungen

Die Erfindung wird im Folgenden beispielhaft unter Bezugnahme auf die Zeichnungen beschrieben.
- Fig. 1: ist eine schematische Darstellung einer gefährlichen Situation zu einem ersten Zeitpunkt.
- Fig. 2: ist eine schematische Darstellung einer gefährlichen Situation gemäß Fig. 1 zu einem späteren, zweiten Zeitpunkt.
- Fig. 3: ist eine schematische Darstellung einer gefährlichen Situation gemäß Fig. 1, jedoch bei Verwendung einer erfindungsgemäßen Fahrzeug-Sicherheitsvorrichtung.
- Fig. 4: ist eine dreidimensionale Darstellung der gefährlichen Situation gemäß Fig. 3 bei Verwendung einer erfindungsgemäßen Fahrzeug-Sicherheitsvorrichtung.
- Fig. 5: ist eine dreidimensionale Darstellung der gefährlichen Situation gemäß Fig. 4, jedoch aus einer anderen Perspektive.

### Detaillierte Beschreibung der Erfindung

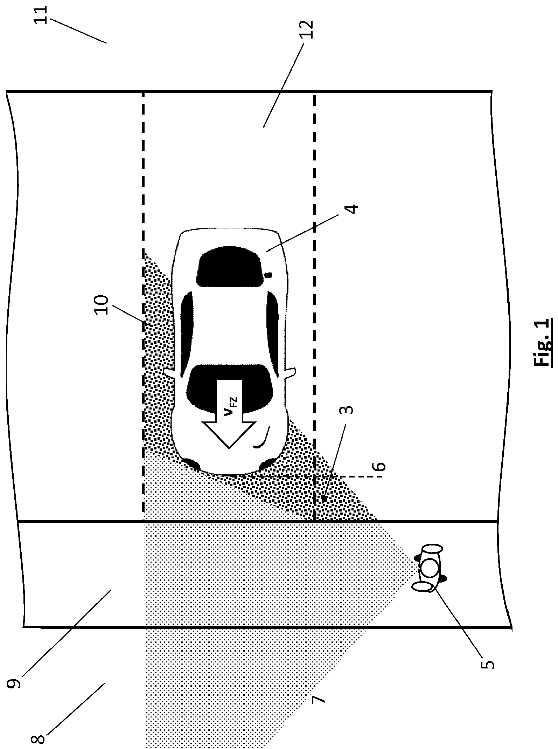

Fig. 1 ist eine Darstellung einer Situation im Straßenverkehr zu einem ersten Zeitpunkt, wobei ein Fahrzeug 4 aus einem Innenhof 11 kommend, durch eine Ausfahrt oder Hausdurchfahrt 12 mit einer Geschwindigkeit v_{FZ} in der eingezeichneten Pfeil-Richtung zu einer Straße 8 gefahren wird.

Bevor das Fahrzeug 4 auf die Straße 8 gelangt, muss es einen Gehweg 9 überqueren. Auf diesem Gehweg 9 geht ein weiterer Verkehrsteilnehmer 5, nämlich ein Fußgänger, in Richtung auf die Ausfahrt oder Hausdurchfahrt 12 zu. Der Fußgänger und das Fahrzeug 4 könnten also etwa an einem Kreuzungspunkt der beiden Verkehrsteilnehmer aufeinandertreffen, der den Scheitelpunkt darstellt des rechten Winkels zwischen den Bewegungsrichtungen des Fahrzeugs 4 einerseits und des weiteren Verkehrsteilnehmers 5 andererseits.

Das Sichtfeld 7 des Fußgängers ist stark eingeschränkt durch das Vorhandensein einer Hausmauer als Sichthindernis 3 in der Nähe des beschriebenen Scheitelpunktes. Durch das Sichthindernis 3 wird eine direkte Sicht zwischen dem Fahrer des Fahrzeugs 4 und dem weiteren Verkehrsteilnehmer 5 verhindert. Das Fahrzeug 4 liegt in einem nicht einsehbaren Bereich 10 und wird erst nach Überschreiten der Linie 6, die den frühestmöglichen Sichtkontakt ohne Fahrzeug-Sicherheitsvorrichtung darstellt, durch den Fußgänger sichtbar.

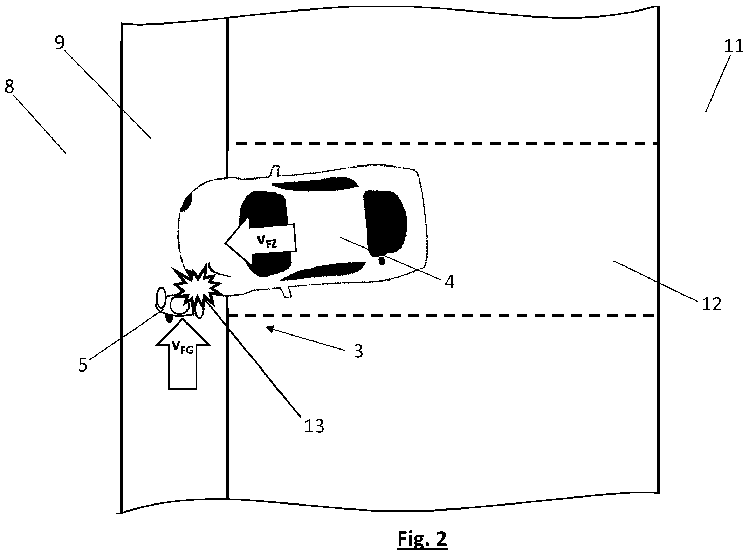

Wie in Fig. 2 für einen späteren, zweiten Zeitpunkt, dargestellt, kann es dadurch zu einer Kollision zwischen den beiden Verkehrsteilnehmern im Kollisionspunkt 13 kommen, an welchem sich die Bewegungsrichtung des Fahrzeuges mit Geschwindigkeit v_{FZ} und die Bewegungsrichtung des Fußgängers 5 mit Geschwindigkeit v_{FG} schneiden.

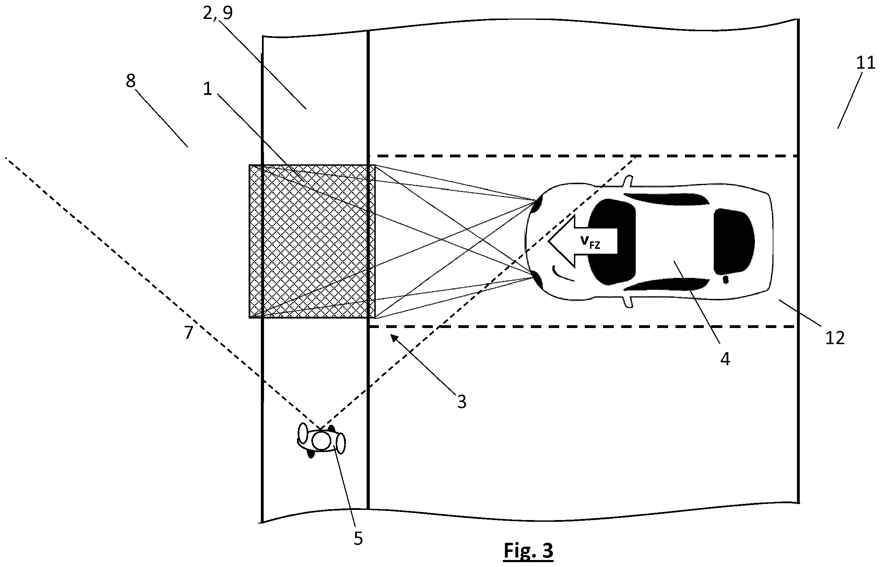

Um dieses Problem zu beseitigen ist das Fahrzeug in Fig. 3 mit einer erfindungsgemäßen Fahrzeug-Sicherheitsvorrichtung ausgestattet.

Die Fahrzeug-Sicherheitsvorrichtung umfasst eine Erkennungseinrichtung die dazu eingerichtet ist, den unübersichtlichen Fahrtabschnitt vor dem Fahrzeug in Fahrtrichtung zu erkennen und eine Signalisierungseinrichtung, die dazu eingerichtet ist, ein Lichtsignal 1 auf den unübersichtlichen Fahrtabschnitt abzugeben.

Das Lichtsignal 1 wird auf den Boden 2 im Bereich des unübersichtlichen Fahrtabschnitts ausgestrahlt bzw. projiziert, im dargestellten Fall auf den Gehweg 9, eventuell auch teilweise auf die Straße 8.

Das Lichtsignal 1 kann beispielsweise in verschiedenen Farben erscheinen, zum Beispiel in größer Entfernung zum unübersichtlichen Fahrtabschnitt in Gelb, in größerer Nähe in Rot. Das Signal 1 kann beispielsweise auch Blinken.

Das Lichtsignal 1 kann beispielsweise mittels LEDs, mittels Matrix- oder Laserlicht erzeugt werden.

Die Erkennungseinrichtung kann beispielsweise ein GPS-System im Fahrzeug 4 verwenden und/oder eine Kamera und/oder ein Radarsystem und/oder eine Ultraschall-Sensorik.

Die Fahrzeug-Sicherheitsvorrichtung kann beispielsweise auch auf Straßen mit engen, unübersichtlichen Kurven eingesetzt werden.

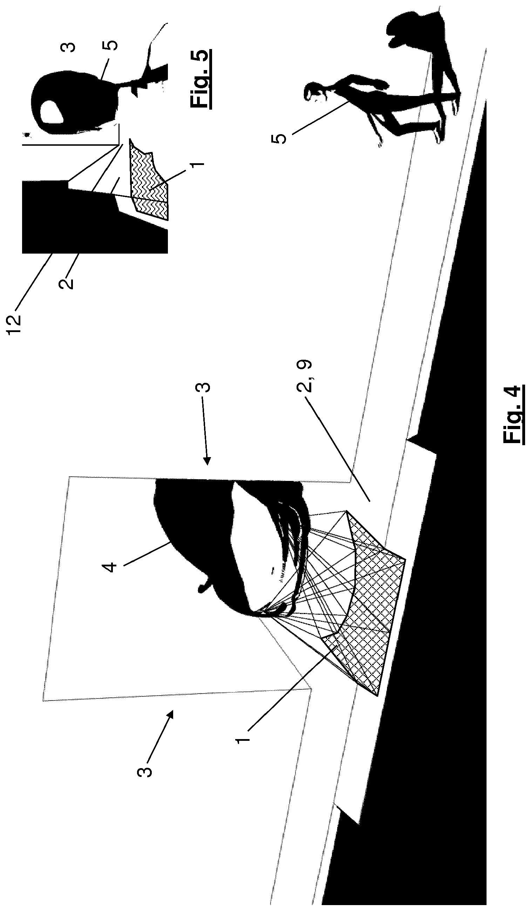

Fig. 4 zeigt eine dreidimensionale Darstellung der gefährlichen Situation gemäß Fig. 3 bei Verwendung einer erfindungsgemäßen Fahrzeug-Sicherheitsvorrichtung. Das Fahrzeug 4 sendet an seiner Frontseite das Lichtsignal 1 aus, dessen Projektion auf dem Boden 2 am Gehweg 9 für den weiteren Verkehrsteilnehmer 5 gut sichtbar ist.

Fig. 5 stellt dieselbe Situation aus einer anderen Perspektive, in Blickrichtung des Fußgängers dar, der, an einer Hausmauer als Sichthindernis 3 entlang, auf die Ausfahrt 12 zugeht und durch das Lichtsignal 1 vor dem für ihn unsichtbaren Fahrzeug 4 gewarnt wird.

### Bezugszeichenliste

- 1: Lichtsignal
- 2: Boden
- 3: Sichthindernis
- 4: Fahrzeug
- 5: weiterer Verkehrsteilnehmer
- 6: Linie des frühestmöglichen Sichtkontakts
- 7: Sichtfeld
- 8: Straße
- 9: Gehweg
- 10: Nicht einsehbarer Bereich
- 11: Innenhof
- 12: Ausfahrt, Hausdurchfahrt
- 13: Kollisionspunkt

## Patentansprüche

1. Fahrzeug-Sicherheitsvorrichtung, umfassend eine Erkennungseinrichtung die dazu eingerichtet ist, einen unübersichtlichen Fahrtabschnitt vor dem Fahrzeug in Fahrtrichtung zu erkennen und eine Signalisierungseinrichtung, die dazu eingerichtet ist, ein Signal auf den unübersichtlichen Fahrtabschnitt abzugeben.

2. Fahrzeug-Sicherheitsvorrichtung nach Anspruch 1,
**dadurch gekennzeichnet, dass** das Signal ein Lichtsignal (1) ist.

3. Fahrzeug-Sicherheitsvorrichtung nach Anspruch 2,
**dadurch gekennzeichnet, dass** das Lichtsignal (1) auf den Boden (2) im Bereich des unübersichtlichen Fahrtabschnitts ausgestrahlt wird.

4. Fahrzeug-Sicherheitsvorrichtung nach Anspruch 2 oder 3,
**dadurch gekennzeichnet, dass** das Lichtsignal (1) verschiedene Farben und/ oder verschiedene Formen und/oder verschiedene Lichtintensitäten und/oder Ziffern und/oder Buchstaben und/oder Symbole und/oder Signalfolgen und/oder bewegliche Anzeigen umfassen kann.

5. Fahrzeug-Sicherheitsvorrichtung nach zumindest einem der vorhergehenden Ansprüche,
**dadurch gekennzeichnet, dass** die Erkennungseinrichtung ein GPS-System und/oder eine Kamera und/oder ein Radarsystem und/oder eine Ultraschall-Sensorik umfasst.

6. Fahrzeug-Sicherheitsvorrichtung nach zumindest einem der vorhergehenden Ansprüche,
**dadurch gekennzeichnet, dass** der unübersichtliche Fahrtabschnitt eine Ausfahrt ist, dass also die Erkennungseinrichtung zur Erkennung einer unübersichtlichen Ausfahrt eingerichtet ist.

7. Fahrzeug-Sicherheitsvorrichtung nach zumindest einem der vorhergehenden Ansprüche,
**dadurch gekennzeichnet, dass** der unübersichtliche Fahrtabschnitt eine Kurve und/oder eine Kreuzung ist, dass also die Erkennungseinrichtung zur Erkennung einer unübersichtlichen Kurve und/oder einer unübersichtlichen Kreuzung eingerichtet ist.

8. Fahrzeug (4) umfassend eine Fahrzeug-Sicherheitsvorrichtung nach zumindest einem der vorhergehenden Ansprüche, wobei bevorzugt das Fahrzeug (4) einen elektrischen Antrieb aufweist.
